# EUROPÄISCHE PATENTSCHRIFT

(11) **EP 2 958 835 B1**
(45) Veröffentlichungstag und Bekanntmachung des Hinweises auf die Patenterteilung: **15.03.2017**
(21) Anmeldenummer: 14701091.2
(22) Anmeldetag: 22.01.2014
(51) Int. Cl.: B65G 29/00, B21D 51/26

(54) **ZUFÜHRVORRICHTUNG UND VERFAHREN ZUR SUKZESSIVEN ZUFÜHRUNG**
FEED DEVICE AND SUCCESSIVE FEED METHOD
DISPOSITIF DE DISTRIBUTION ET PROCÉDÉ D'AMENÉE SUCCESSIVE

(30) Priorität: 21.02.2013 DE 102013202879
(43) Veröffentlichungstag der Anmeldung: 30.12.2015
(73) Patentinhaber: Mall + Herlan Schweiz AG, 8570 Weinfelden (CH)
(72) Erfinder: WEIS, Manfred, 78315 Radolfzell (DE)
(74) Vertreter: Eisenführ Speiser
(86) Internationale Anmeldenummer: PCT/EP2014/051206
(87) Internationale Veröffentlichungsnummer: WO 2014/127949

(56) Entgegenhaltungen:
- DE-A1- 3 009 114
- DE-A1-102004 017 737
- DE-A1-102006 028 266

## Beschreibung

Die Erfindung betrifft eine Zuführvorrichtung für eine sukzessive Bearbeitung von Hohlkörpern an ringförmig angeordneten Bearbeitungsstationen, nach dem Oberbegriff des Anspruchs 1, eine Einziehmaschine zur sukzessiven Bearbeitung von Hohlkörpern mit einer solchen Zuführvorrichtung, ein Verfahren zur sukzessiven Zuführung von Hohlkörpern an ringförmig angeordneten Bearbeitungsstationen nach dem Oberbegriff des Anspruchs 5 und ein entsprechendes Computerprogramm.

Zurzeit werden taktende Einziehmaschinen zur Herstellung von beispielsweise Metallhohlkörpern überwiegend in einer horizontalen Bauweise eingesetzt, d.h. die Arbeitsbewegung findet im Wesentlichen horizontal statt, wobei in den Anfängen des Einziehens abgewandelte Vertikalpressen eingesetzt wurden.

Herkömmlich werden die Dosen (als ein Beispiel eines Metallhohlkörpers) in der Regel über ein Band kommend von unten (aus praktischen Erwägungen, da dann andere Bereiche besser zugänglich bleiben) über eine Zuführeinrichtung (regelmäßig eine Vakuumtrommel) der Maschine zugeführt, von dort in eine Haltevorrichtung übergeben, die ihrerseits auf einem synchron zum Arbeitsprozess taktend angetriebenen Drehtisch platziert ist. So wird die Dose den verschieden Arbeitsstufen nacheinander zugeführt, bis letztlich alle Bearbeitungsschritte, die in der Maschine vorgesehen sind, abgearbeitet wurden. Schließlich wird die Dose über eine der Zuführvorrichtung vergleichbare Abführeinrichtung aus dem Arbeitsbereich der Maschine entnommen und über ein Band der nächsten Maschine übergeben.

Zurzeit werden Maschinen mit Drehtischen zwischen 20 und 48 Stationen kommerziell angeboten bzw. betrieben, wobei bereits 50 Stationen vorgesehen sind.

Die kleineren Maschinen stammen aus der Zeit, als die Metallbehälter aus Al99.5 waren und nur eine Schulter geformt wurde, die dazu dient, den Dosendurchmesser auf den Durchmesser herunter einzuziehen, den im Beispielsfall von Aerosoldosen das aufzusetzende Ventil hat. Mit steigenden Durchmessern der Behälter und zunehmend komplexeren Formen wurden größere Maschinen entwickelt, mit denen diese Anforderungen in einer Maschine erfüllt werden konnten, da man pro Umformschritt nur einen gewissen Umformgrad (letztlich eine Durchmesseränderung) erreichen kann. Aufwändigere oder größere Verformung benötigen also mehr Stationen.

In späteren Jahren kamen zu den Behältern aus Al99.5 solche aus legiertem Aluminium oder auch aus Stahl mit dünneren Wandstärken hinzu ("dünnwandige Behälter" genannt). Bedingt durch die Materialeigenschaften sind hier die erreichbaren Umformgrade pro Stufe aber maximal nur etwa halb so groß, so dass für die gleiche Form im Vergleich zu einem gleichen "dickwandigem" Behälter aus Al99.5 mindestens doppelt so viele Stationen erforderlich sind.

Es besteht somit das grundsätzliche Bestreben, eine größere Anzahl von Stationen für einen Einziehvorgang bereitstellen zu können.

Das Dokument DE 10 2006 028266 A1 offenbart eine Zuführvorrichtung für sukzessive Bearbeitung von Hohlkörpern an ringförmig angeordneten Bearbeitungsstationen nach dem Oberbegriff der Ansprüche 1 und 5.

Nach heutigem Stand der Technik besteht ein erster Ansatz darin, mehrere (kleine) bekannte Maschinen hintereinander (also in Reihe) zu kombinieren.

Ein Nachteil dieses ersten Ansatzes besteht darin, dass vergleichsweise viel Platz benötigt wird, wobei ein weiterer Nachteil in den hohen Kosten pro Station liegt, da die meisten Komponenten mehrfach vorgehalten werden müssen. Des Weiteren resultiert aus dem Betrieb von mehreren Maschinen auch ein höherer Energiebedarf, was sich ungünstig auf die Umweltbilanz des Hohlkörpers auswirkt. Nachteilig ist ferner, dass die Dosen am Auslauf einer Maschine aus den Haltefuttern genommen werden und in der folgenden wieder aufgenommen werden müssen, wobei diese Aufnahme idealerweise in exakt derselben Position in Bezug auf das Futter wie vorher vorgenommen werden sollte, da andernfalls unerwünschterweise die Orientierung des Hohlkörpers zu seiner Längsachse verloren ginge (es also zu einer Verdrehung des Hohlkörpers käme). Ein weiterer Aufwand besteht darin, dass die Maschinen synchronisiert werden oder durch kleine Pufferstrecken in einem ausreichenden Maß entkoppelt werden. Diese Pufferstrecken sind z.B. Schalenförderer, in denen die Dosen nur sehr eingeschränkt geordnet positioniert sind. Des Weiteren erhöht sich mit jeder Maschinenübergabe das Risiko von Beschädigungen am Hohlkörper und somit eine Erhöhung des Ausschusses.

Ein zweiter bekannter Ansatz besteht darin, immer größere Maschinen vorzusehen - demnächst 50 Stationen auf einem Drehtisch.

Dieser Ansatz findet seine Grenzen mit Zusammenhang mit dem beherrschbaren Handling und den bewegten Massen, wobei dennoch die machbare Zahl von Stationen für eine Zahl von Produkten, insbesondere aus dem Bereich der dünnwandigen Behälter, unbefriedigend ist. Ein besonderes Problem besteht darin, dass eine Querbeschleunigung an der Maschine beim Drehen des Drehtisches mit steigender Größe deutlich zunimmt, wobei diese Bewegung nur sehr aufwändig zu kompensieren ist, da sie intermittierend ist.

Eine Aufgabe, angesichts derer die vorliegende Erfindung gemacht wurde, besteht darin, eine Zuführvorrichtung für eine sukzessive Bearbeitung von Hohlkörpern an ringförmig angeordneten Bearbeitungsstationen, eine Einziehmaschine zur sukzessiven Bearbeitung von Hohlkörpern, ein Verfahren zur sukzessiven Zuführung von Hohlkörpern an ringförmig angeordneten Bearbeitungsstationen und ein entsprechendes Computerprogramm bereitzustellen, die es erlauben, eine Zahl von Bearbeitungsstationen bereitzustellen, die die mit dem zweiten Ansatz erreichbare Zahl erreicht und überschreitet, ohne dass entsprechend dem ersten Ansatz ein übermäßiger Platzbedarf oder eine ähnlich ineffiziente Ressourcennutzung vorliegen würde.

Erfindungsgemäß wird angesichts dieser Aufgabe eine Zuführvorrichtung für eine sukzessive Bearbeitung von Hohlkörpern an ringförmig angeordneten Bearbeitungsstationen vorgeschlagen, mit den Merkmalen des Anspruchs 1.

Ebenfalls wird eine Einziehmaschine zur sukzessiven Bearbeitung von Hohlkörpern vorgeschlagen, mit einer erfindungsgemäßen Zuführvorrichtung und Bearbeitungsstationen für Hohlkörper, die zur Zuführung von Hohlkörpern mittels der Zuführvorrichtung ausgestaltet sind, wobei die Bearbeitungsstationen auf einem ersten Ring entsprechend der ersten Führung und einem zweiten Ring entsprechend der zweiten Führung angeordnet sind.

Zudem wird ein Verfahren zur sukzessiven Zuführung von Hohlkörpern an ringförmig angeordneten Bearbeitungsstationen vorgeschlagen, mit der Merkmale des Anspruchs 5.

Ferner wird ein Computerprogramm mit Computerprogrammmitteln vorgeschlagen, die eine erfindungsgemäße Zuführvorrichtung oder eine erfindungsgemäße Einziehmaschine dazu veranlassen, ein erfindungsgemäßes Verfahren auszuführen, wenn das Computerprogramm auf der Zuführvorrichtung oder der Einziehmaschine ausgeführt wird.

Der Erfindung liegt die Erkenntnis zugrunde, dass durch eine Anordnung der Bearbeitungsstationen auf Ringen, von denen einer in einem anderen befindlich ist, eine bessere Raumausnutzung als mit einer Anordnung von vollständigen Maschinen nebeneinander erreicht werden kann. Da zudem wesentliche Elemente der gesamten Anordnung gemeinsam für die mehreren Ringe von Bearbeitungsstationen gemeinsam genutzt werden können, ist der maschinelle Aufwand pro Station ebenfalls vergleichsweise zum ersten Ansatz geringer. Statt dass die Größe eines einzelnen Ringes, in dem Bearbeitungsstationen angeordnet sind, durch Vergrößerung seines Durchmessers erhöht würde, sieht die Erfindung bei einer Erhöhung der Zahl von Stationen vor, dass der Pfad, der durch die Stationen läuft auf einer vergleichsweise kleinen Fläche "gefaltet" wird, indem mehrere parallele Ringe von Bearbeitungsstationen mit Hohlkörpern versorgt werden. Besteht der Wunsch danach, einen höheren Durchsatz pro Maschine zu erhalten, können die Ringe der Bearbeitungsstationen auch parallel mit entsprechend höherem Durchsatz genutzt werden.

Der Begriff der "Führung" bezieht sich vorliegend auf Einrichtungen zum Halten und Bewegen eines bzw. mehrerer Hohlkörper entlang einer vorbestimmten Bahn, wobei insbesondere ein Drehtisch ein Beispiel einer Führung ist. Die vorbestimmte Bahn einer Führung kann beispielsweise auch durch Schienenelemente definiert werden, die die Bahn einschließen. Selbst wenn zwei Führungen mit solchen Schienenelementen an sich separat voneinander vorgesehen sind, schließt dies nicht aus, dass eine Außengrenze einer inneren Bahn und eine Innengrenze der äußeren Bahn durch ein entsprechend ausgestaltetes Schienenelement gleichzeitig definiert werden, so dass das Schienenelement zumindest teilweise beiden Führungen zugerechnet werden kann.

Es ist zu bemerken, dass die vorliegende Erfindung nicht darauf beschränkt ist, dass lediglich zwei Führungen vorgesehen werden. Es ist möglich, auch eine größere Zahl von Führungen vorzusehen, beispielsweise drei Führungen. Werden drei oder mehr Führungen vorgesehen, so kann dies in einer Art geschehen, dass eine zweite Führung innerhalb einer ersten Führung angeordnet ist (wie dies z.B. schon oben beschrieben ist), wobei innerhalb der zweiten Führung die dritte Führung angeordnet ist. Bei dieser Anordnung können die Führungen konzentrisch angeordnet sein. Es ist allerdings ebenfalls möglich, die zweite und dritte Führung nebeneinander innerhalb der ersten Führung vorzusehen. Entsprechende Variationen ergeben sich bei einer noch größeren Zahl von vorhandenen Führungen.

In einer Ausführungsform der Erfindung ist die Umsetzeinheit zum Umsetzen eines Hohlkörpers jeweils von der ersten Führung in die zweite Führung und von der zweiten Führung in die erste Führung ausgestaltet.

Es ist vorteilhaft an dieser Ausführungsform, dass die so ausgestaltete Umsetzeinheit das Umsetzen von Hohlkörpern beispielsweise von einer äußeren Führung auf eine innere Führung und zurück erlaubt, wobei eine Zu- und Abführung als solches von Hohlkörpern zu/von der erfindungsgemäßen Vorrichtung im Wesentlichen in gewohnter Weise erfolgen kann, insbesondere in Form einer Zuführung und einer Abführung zur äußeren Führung, innerhalb deren wenigstens eine innere Führung vorgesehen ist.

Es ist allerdings ebenfalls möglich, Zuführung und Abführung von Hohlkörpern zu/von der erfindungsgemäßen Vorrichtung im Zusammenhang mit unterschiedlichen Führungen vorzusehen. So kann beispielsweise ein Hohlkörper einer äußeren Führung zugeführt werden, nach Durchlauf eines typischerweise nahezu vollständigen Umlaufs von der äußeren Führung durch eine Umsetzeinheit auf eine innere Führung umgesetzt und wiederum nach Durchlauf eines typischerweise nahezu vollständigen Umlaufs auf der inneren Führung von dieser aus der Vorrichtung abgeführt werden. Eine Umkehrung dieses Verlaufs oder weitere Abwandlungen oder Kombinationen von Führungsverläufen sind ebenfalls möglich.

In einer Ausgestaltung der obigen Ausführungsform ist die erste Führung separat von der zweiten Führung vorgesehen.

Werden die erste und die zweite Führung separat voneinander vorgesehen, d.h. beispielsweise in Form (im Wesentlichen) unabhängiger Drehtische realisiert, können die unterschiedlichen Führungen mit voneinander abweichenden Winkelschritten getaktet werden, so dass auch unterschiedliche Anzahlen von Bearbeitungsstationen für unterschiedliche Führungen vorgesehen werden können. Ein zeitlich konstanter Versatz zwischen jeweiligen Taktschritten der Führungen kann durch eine entsprechende Halteperiode der Umsetzeinheit adressiert werden.

In einer ersten Alternative der Erfindung weist die Umsetzeinheit ein erstes Umsetzelement zum Umsetzen eines Hohlkörpers von der ersten Führung in die zweite Führung und ein zweites Umsetzelement zum Umsetzen eines Hohlkörpers von der zweiten Führung in die erste Führung auf.

Je nach Auslegung der voneinander separaten Führungen können sich geometrische Beschränkungen ergeben, die bei einer einteiligen Umsetzeinheit, die sowohl Hohlkörper von der ersten Führung in die zweite Führung als auch von der zweiten Führung in die erste Führung umsetzen kann, einen erhöhten Konstruktions- oder Steueraufwand bedingen. Wird die Umsetzeinheit allerdings mehrteilig ausgeführt, wobei das erste und das zweite Umsetzelement separat voneinander vorgesehen sind, können eventuelle geometrische Beschränkungen einfacher adressiert werden.

In einer zweiten Alternative der Erfindung sind die erste Führung und die zweite Führung für eine gegenläufige Bewegung ausgestaltet.

Bei einer gegenläufigen Bewegung der Führungen, insbesondere bei einer hinsichtlich der Schritte oder Takte synchronisierten gegenläufigen Bewegung der Führungen, werden durch die Gegenläufigkeit Querbeschleunigungen bzw. -kräfte oder Drehmomente, die ansonsten innerhalb der Vorrichtung auftreten würden, zumindest teilweise kompensiert, so dass einerseits eine Reduktion in weiteren Maßnahmen angesichts der auftretenden Beschleunigungen, Kräfte bzw. Momente möglich wird (z.B. können die mechanischen Anforderungen reduziert werden) und sich andererseits einer ruhigerer Betrieb der Vorrichtung ergibt, was sich wiederum positiv auf die Qualität bei einer Bearbeitung der Hohlkörper auswirkt, z.B. beim Einziehen.

Erfindungsgemäß können unterschiedliche Führungen beispielsweise in Form eines (gemeinsamen) Drehtischs realisiert werden, der als integrale Einheit zwei oder mehrere Führungsbahnen aufweist, zwischen denen Hohlkörper umgesetzt werden können. In einem solchen Fall ergeben sich durch die gleiche Anzahl von Stationen in einem inneren und einem äußeren Ring von Bearbeitungsstationen unterschiedliche Abstände zwischen den Bearbeitungsstationen der unterschiedlichen Ringe.

In der zweiten Alternative der Erfindung ist die Umsetzeinheit für ein insbesondere paralleles Zuführen eines ersten Hohlkörpers in die erste Führung und eines zweiten Hohlkörpers in die zweite Führung und ein insbesondere paralleles Entnehmen des ersten Hohlkörpers aus der ersten Führung und des zweiten Hohlkörpers aus der zweiten Führung ausgestaltet, wobei die erste Führung und die zweite Führung für eine gegenläufige Bewegung ausgestaltet sind.

Werden mehrere (d.h. zwei oder auch eine höhere Anzahl) Führungen parallel betrieben, kann der Durchsatz eine entsprechenden Vorrichtung entsprechend erhöht werden.

Bei einer Umsetzeinheit in Form einer gemeinsamen, integralen Zuführ- und Abführvorrichtung für die erste und zweite Führung ergibt sich im einfachsten Fall eine Relation zwischen der Zahl der nutzbaren Stationen für die erste Führung und die zweite Führung in der Form, dass eine gleiche Zahl von Stationen vorgesehen ist oder ein ganzzahliges Verhältnis zwischen den Stationen besteht. Werden für jeden Hohlkörper, der der inneren Führung zugeführt bzw. von dieser abgeführt wird, beispielsweise zwei Hohlkörper zu der äußeren Führung zugeführt bzw. von dieser abgeführt, können von der äußeren Führung entsprechend eine doppelte Anzahl von Bearbeitungsstationen bedient werden.

Auch bei dieser Ausführungsform kann die Umsetzeinheit mehrteilig ausgestaltet werden, wobei bei einer mehrteiligen Ausführung eine unabhängige Zufuhr- bzw. Abfuhrzahl für die Führungen vorgesehen werden kann, was eine entsprechende Wahl der jeweiligen Bearbeitungsstationen erlaubt.

Bei einer gegenläufigen Bewegung der Führungen ergeben sich auch bei einer entsprechenden Ausgestaltung dieser Ausführungsform die hier für die obige Ausführungsform beschriebenen Vorteile.

Die Erfindung wird im Folgenden unter Bezug auf illustrative Ausführungsbeispiele und die beiliegenden Figuren erläutert. Hierbei zeigt
- Fig. 1: eine schematische Darstellung eines ersten Ausführungsbeispiels einer erfindungsgemäßen Einziehmaschine mit einer erfindungsgemäßen Zuführvorrichtung,
- Fig. 2: eine schematische Darstellung eines zweiten Ausführungsbeispiels einer erfindungsgemäßen Einziehmaschine mit einer erfindungsgemäßen Zuführvorrichtung,
- Fig. 3: eine schematische Darstellung eines dritten Ausführungsbeispiels einer erfindungsgemäßen Einziehmaschine mit einer erfindungsgemäßen Zuführvorrichtung,
- Fig. 4: eine schematische Darstellung eines vierten Ausführungsbeispiels einer erfindungsgemäßen Einziehmaschine mit einer erfindungsgemäßen Zuführvorrichtung und
- Fig. 5: ein schematisches Ablaufdiagramm für den Lauf eines Hohlkörpers im Zusammenhang mit einem Ausführungsbeispiel eines erfindungsgemäßen Verfahrens.

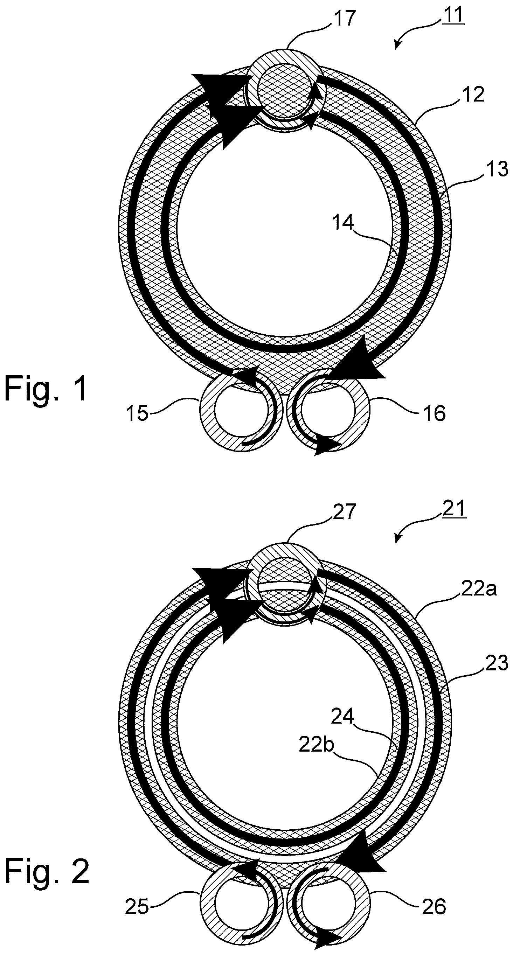

Fig. 1 zeigt eine schematische Darstellung eines ersten Ausführungsbeispiels einer erfindungsgemäßen Einziehmaschine mit einer erfindungsgemäßen Zuführvorrichtung.

Die Einziehmaschine 11 umfasst einen Drehtisch 12 mit einer ersten Führung 13 und einer zweiten Führung 14, wobei die zweite Führung 14 innerhalb der ersten Führung 13 angeordnet ist. Die Einziehmaschine 11 weist ferner ein Zuführelement 15 und ein Abführelement 16 für die erste Führung 13 sowie eine Umsetzeinheit 17 für ein Umsetzen von Hohlkörpern von der ersten Führung 13 auf die zweite Führung 14 und von der zweiten Führung 14 auf die erste Führung 13 auf.

Die Einziehmaschine 11 umfasst ferner eine Anzahl Bearbeitungsstationen (nicht dargestellt), wobei ein Hohlkörper jeweils durch die Führungen 13, 14 sukzessive den Bearbeitungsstationen zugeführt wird.

Ein zu bearbeitender Hohlkörper (nicht dargestellt) wird von dem Zuführelement 15 der ersten Führung 13 zugeführt und von dieser im Uhrzeigersinn jeweils nacheinander schrittweise den auf diesem Wege befindlichen Bearbeitungsstationen zugeführt, bis die Umsetzeinheit 17 erreicht wird. Die Umsetzeinheit 17 setzt den bereits teilweise bearbeiteten Hohlkörper von der ersten Führung 13 auf die zweite Führung 14 um, so dass die zweite Führung 14 (weiterhin im Uhrzeigersinn) den Hohlkörper den weiteren Bearbeitungsstationen zuführt, die von der zweiten Führung 14 bedient werden, bis der Hohlkörper einen Umlauf in der zweiten Führung 14 hinter sich gebracht hat und von der Umsetzeinheit 17 von der zweiten Führung 14 auf die erste Führung 13 (zurück-)umgesetzt wird, um den Umlauf mit der ersten Führung 13 weiter zu durchlaufen. Der so nacheinander den jeweiligen Bearbeitungsstationen zugeführte Hohlkörper wird schließlich von der Abführeinheit 16 aus der ersten Führung 13 entnommen und weitergegeben.

In diesem Ausführungsbeispiel ist die Umsetzeinheit 17 auf einer der Zuführeinheit 15 und der Abführeinheit 16 gegenüberliegenden Seite des Drehtischs 12 vorgesehen, wobei die Erfindung nicht hierauf beschränkt ist. Das Umsetzen zwischen den Führungen 13, 14 kann auch an einer anderen Relativposition vorgesehen werden. Die Zuführeinheit 15 und die Abführeinheit 16 sind zur Ausnutzung des zur Verfügung stehenden Platzes und der möglichen Stationszahl benachbart angeordnet.

Fig. 2 zeigt eine schematische Darstellung eines zweiten Ausführungsbeispiels einer erfindungsgemäßen Einziehmaschine mit einer erfindungsgemäßen Zuführvorrichtung.

Die Einziehmaschine 21 des zweiten Ausführungsbeispiels umfasst eine erste Führung 23 und eine zweite Führung 24, die innerhalb der ersten Führung 23 angeordnet ist. Hierbei sind zwei Drehtische 22a, 22b vorgesehen. Wie auch die Einziehmaschine des ersten Ausführungsbeispiels weist die Einziehmaschine 21 eine Zuführeinheit 25, eine Umsetzeinheit 27 und eine Abführeinheit 26 auf.

Die Einziehmaschine 21 des zweiten Ausführungsbeispiels unterscheidet sich von der des ersten Ausführungsbeispiels darin, dass anstellen des gemeinsamen Drehtisches für die erste Führung 23 und die zweite Führung 24 separate Drehtische 22a, 22b vorgesehen sind. Dies erlaubt, die Anzahl der zu bedienenden Stationen und damit die Takt- bzw.

Schrittrate für die erste Führung 23 und die zweite Führung 24 unabhängig voneinander oder zumindest unterschiedlich einzustellen.

Im Grundsatz entspricht die Funktionsweise und der Betrieb der Einziehmaschine 21 des zweiten Ausführungsbeispiels der des ersten Ausführungsbeispiels, so dass eine entsprechende Wiederholung des obigen nicht nötig ist.

Bei diesem Ausführungsbeispiel stimmt der Drehsinn des Drehtischs 22a der ersten Führung 23 und mit dem des Drehtisches 22b der zweiten Führung überein. Es ist allerdings auch möglich, soweit die geometrischen Gegebenheiten der jeweiligen Ausgestaltung dies erlauben, die Drehtische bzw. Führungen in entgegengesetzter Richtung zu betreiben.

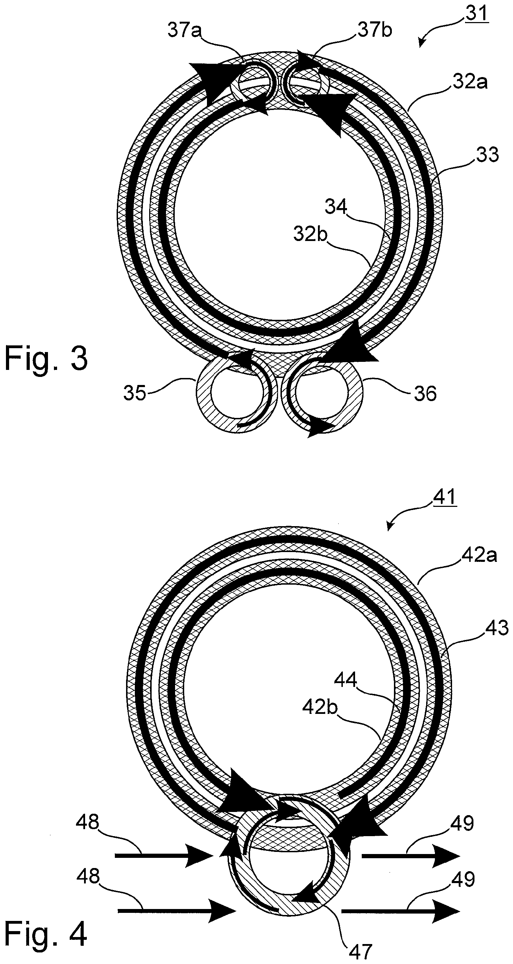

Fig. 3 zeigt eine schematische Darstellung eines dritten Ausführungsbeispiels einer erfindungsgemäßen Einziehmaschine mit einer erfindungsgemäßen Zuführvorrichtung.

Die Einziehmaschine 31 des dritten Ausführungsbeispiels umfasst - vergleichbar mit der des zweiten Ausführungsbeispiels - zwei Führungen 33, 34 mit eigenen Drehtischen 32a, 32b, wobei die zweite Führung 34 innerhalb der ersten Führung 33 angeordnet ist. Die Einziehmaschine umfasst zudem ebenfalls eine Zuführeinheit 35 und eine Abführeinheit 36, die Hohlkörper der ersten Führung 34 zuführen und von dieser abführen.

Abweichend von dem zweiten Ausführungsbeispiel umfasst die Einziehmaschine 31 des dritten Ausführungsbeispiels eine mehrteilige Umsetzeinheit mit einem ersten Umsetzelement 37a und einem zweiten Umsetzelement 37b, wobei zudem die Drehrichtung der ersten Führung 33 gegenläufig zur Drehrichtung der zweiten Führung 34 ist.

Das erste Umsetzelement 37a dient dazu, Hohlkörper auf ihrem Lauf durch die Einziehmaschine 31 von der ersten Führung 33 auf die zweite Führung 34 umzusetzen, während das zweite Umsetzelement 37b dazu dient, Hohlkörper nach Durchlauf der Stationen, die von der zweiten Führung 34 bedient werden, von der zweiten Führung 34 wieder auf die erste Führung 33 umzusetzen.

Fig. 4 zeigt eine schematische Darstellung eines vierten Ausführungsbeispiels einer erfindungsgemäßen Einziehmaschine mit einer erfindungsgemäßen Zuführvorrichtung.

Die Einziehmaschine 41 des vierten Ausführungsbeispiels umfasst, ähnlich zu denen des zweiten und dritten Ausführungsbeispiels, separate Drehtische 42a, 42b für eine erste Führung 43 und eine zweite Führung 44.

Abweichend von den ersten drei Ausführungsbeispielen umfasst die Einziehmaschine 41 eine Umsetzeinheit 47, die gemeinsam zugeführte Hohlkörper der ersten Führung 43 und der zweiten Führung 44 zuführt, wobei damit die Menge an zugeführten Hohlkörpern im Vergleich zu den ersten drei Ausführungsbeispielen verdoppelt ist, was durch Pfeile 48 angedeutet ist.

Die parallel den Führungen 43, 44 zugeführten Hohlkörper durchlaufen die Einziehmaschine 41 parallel und werden nach einem Umlauf durch die Umsetzeinheit 47 der ersten Führung 43 und der zweiten Führung 44 wiederum parallel entnommen und abgeführt (siehe Pfeile 49).

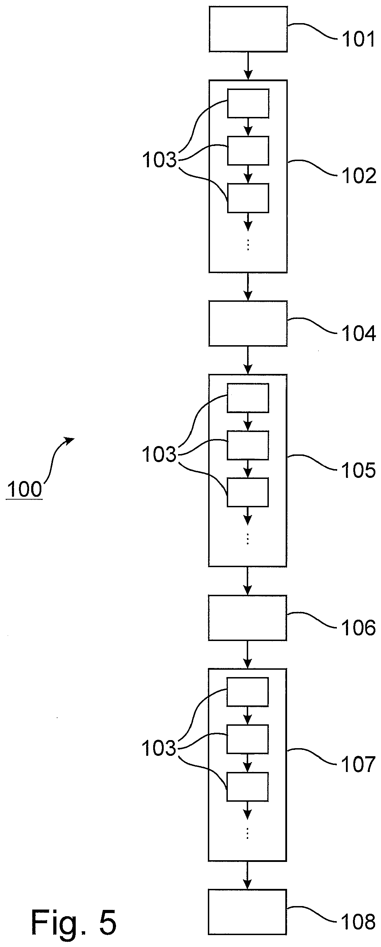

Fig. 5 zeigt ein schematisches Ablaufdiagramm für den Lauf eines Hohlkörpers im Zusammenhang mit einem Ausführungsbeispiel eines erfindungsgemäßen Verfahrens.

Das Verfahren 100 beginnt mit einem Zuführen 101 des Hohlkörpers zur ersten Führung, wonach eine erste Bearbeitungsfolge 102 folgt, die ein sukzessives Zuführen 103 des Hohlkörpers zu entsprechenden Bearbeitungsstationen und entsprechendes Bearbeiten umfasst. Auf die erste Bearbeitungsfolge 102 folgend wird der Hohlkörper in Schritt 104 in die zweite Führung umgesetzt, wobei die zweite Führung innerhalb der ersten Führung angeordnet ist. Das Umsetzen 104 unterscheidet sich von den bekannten Entnahmen aus einer Führung bei herkömmlichen Einziehmaschinen dadurch, dass das Umsetzen 104 von der äußeren ersten Führung in eine darin angeordnete zweite Führung erfolgt und kein Abführen aus der Einziehmaschine darstellt. Nach dem Umsetzen 104 folgt eine zweite Bearbeitungsfolge 105 mit entsprechendem sukzessivem Zuführen 103 und Bearbeiten (vergleichbar zur ersten Bearbeitungsfolge). Nach Abschluss der zweiten Bearbeitungsfolge 105 (während der der Hohlkörper von der zweiten Führung geführt wurde) erfolgt ein weiteres Umsetzen 106 von der zweiten Führung zurück in die erste Führung, wonach die Bearbeitung mit einer dritten Bearbeitungsfolge 107 fortgesetzt wird. Schließlich wird der von der Einziehmaschine bearbeitete Hohlkörper in Schritt 108 abgeführt.

Ein Aspekt der vorliegenden Erfindung sieht zwei Bahnen von Futtern auf einem Drehtisch vor, wobei in einem Bereich die Hohlkörper von der einen Bahn (vorzugsweise der äußeren) auf die andere übergeben werden und diese dann nach fast einem ganzen Umlauf kurz vor Erreichen der Übergabeposition wieder zurück auf die Ausgangsbahn übergeben werden. Hierbei haben beide Bahnen gleich viele Stationen, so dass der Abstand zwischen den Futtern auf der äußeren Bahn grösser ist als auf der inneren Bahn.

Um die geometrischen Bedingungen beim Umsetzen von einer Bahn auf die andere zu verbessern, sieht ein weiterer Aspekt der Erfindung mehrere (vorzugsweise 2) (vorzugsweise konzentrisch) ineinander (vorzugsweise gegenläufig) laufende Drehringe vor, bei denen in einem Bereich die Hohlkörper von einem (vorzugsweise äußeren) auf den bzw. einen anderen Drehring übergeben werden und von dort nach fast einem ganzen Umlauf vor dem Wiedererreichen des Übergabebereichs wieder zurück auf den ursprünglichen Drehring zurückgesetzt werden.

Bei diesem Aspekt muss die Anzahl der Stationen auf den Drehringen nicht gleich sein, so dass die Raumausnutzung weiter verbessert ist. Eine beispielhafte Dimensionierung wäre etwa 36 Stationen innen und 48 Stationen außen. Wenn die Transfers auf separaten Transfereinheiten (z.B. Vakuumtrommeln) realisiert werden, werden die Einschränkungen in der geometrischen Auslegung weiter reduziert.

Durch gegenläufige Drehringe wird eine Querbeschleunigung, die bei einem Takten (schrittweisen Bewegen) der Drehringe auftritt, schon sehr weitgehend kompensiert, ohne dass weitere Zusatzmaßnahmen nötig würden, so dass die Maschine trotz einer großen Anzahl an Stationen vergleichsweise ruhig läuft oder leichter gebaut werden kann.

Im Vergleich zu den bisherigen Ansätzen baut eine solche Maschine deutliche kleiner als eine Kombination aus mehreren Maschinen, aber auch als eine Maschine mit vergleichbarer Stationsanzahl auf einem Drehtisch mit einer Spur. Dadurch ist seine solche Maschine auch preiswerter zu bauen.

Bei den Transfers zwischen den Bahnen wird der Hohlkörper vorzugsweise niemals der Schwerkraft überlassen, so dass eine exakte Positionierung im Futter leicht möglich ist und Vorkehrungen, um frei fallende Dosen wieder zu beruhigen, entfallen können.

Ein weiterer Aspekt der Erfindung sieht vor, die ankommenden einzuziehenden Hohlkörper durch eine spezielle Ladevorrichtung in mehrere Spuren zu laden und dann eine Maschine zu haben, bei der entsprechend die mehreren Drehringe parallel sind, womit sich zwar keine maximale Erhöhung der Anzahl der Stationen für einen Hohlkörper ergibt, die Maschine aber mit entsprechend erhöhter Ausbringung arbeitet.

Der Antrieb der Führungen (Drehtische, Drehringe) kann erfolgen über
- ein mechanisches Schrittschaltgetriebe, das auf einen Ring direkt wirkt, dessen Bewegung über einen Ritzelsatz auf einen anderen Drehtisch dem Stationsverhältnis entsprechend übertragen wird,
- einen oder mehrere Servoantriebe, die auf einen Ring direkt wirken, dessen Bewegung über einen Ritzelsatz auf einen anderen Drehtisch dem Stationsverhältnis entsprechend übertragen wird, oder
- einem oder mehreren Servoantriebe pro Drehring, so dass die Ringe unabhängig voneinander gesteuert werden können.

Die Erfindung sieht insbesondere eine Einziehmaschine vor, in der die Hohlkörper auf zwei im wesentlichen konzentrischen Bahnen durch die Maschine geführt werden und die Hohlkörper von der einen auf die andere Bahn und am Ende des Durchlaufs auf dieser Bahn wieder zurück auf die Ausgangsbahn umgesetzt werden, wobei die Bahnen vorzugsweise gegenläufig durchlaufen werden, wobei die äußere Bahn insbesondere mehr Stationen als die innere hat und das Umsetzen zwischen den Bahnen vorteilhafterweise mit separaten Umsetzeinrichtungen realisiert ist.

Die Erfindung sieht auch eine Einziehmaschine mit mehreren Bahnen vor, bei der Bahnen parallel geladen werden, so dass pro Hub mehrere Hohlkörper an parallelen Stationen bearbeitet werden können, womit der Gesamtdurchsatz entsprechend erhöht ist.

Ein weiterer Aspekt der Erfindung betrifft eine Einziehmaschine zur sukzessiven Bearbeitung von Hohlkörpern an ringförmig angeordneten Bearbeitungsstationen, wobei Bearbeitungsstationen der Einziehmaschine auf einem ersten Ring und einem zweiten Ring angeordnet sind, der sich innerhalb des ersten Rings befindet, und die Einziehmaschine wenigstens eine Umsetzeinheit zum Umsetzen eines Hohlkörpers zwischen einer Führung für Bearbeitungsstationen des ersten Rings und einer Führung für Bearbeitungsstationen des zweiten Rings umfasst, sowie ein Verfahren zur sukzessiven Bearbeitung von Hohlkörpern an ringförmig angeordneten Bearbeitungsstationen, mit einem sukzessiven Zuführen eines Hohlkörpers zu Bearbeitungsstationen einer Einziehmaschine mit einer Führung, wobei die die Bearbeitungsstationen auf einem ersten Ring und einem zweiten Ring angeordnet sind, der sich innerhalb des ersten Ring befindet, wobei das Zuführen ein Umsetzen eines Hohlkörpers von einer Führung für Bearbeitungsstationen des ersten Rings nach innen zu einer Führung für Bearbeitungsstationen des zweiten Rings umfasst.

Die Erfindung wurde hier vornehmlich unter Bezug auf metallische Hohlkörper, wie sie beispielsweise bei der Dosenerstellung genutzt werden, beschrieben, wobei die Erfindung auch in Zusammenhängen eingesetzt werden kann, bei denen keine hohe Anzahl von Stationen nötig ist (z.B. Kunststoffhohlkörper), wenn mehrere Objekte pro Takt geladen werden und entsprechend größere Schritte beim "Schalten" gemacht werden (man spricht vom "Schalten" des Drehtisches, wenn dieser um einen Takt weiter gedreht wird).

Auch wenn die Ringe, in denen die Bearbeitungsstationen angeordnet sind, hier vornehmlich als konzentrische Ringe dargestellt bzw. diskutiert wurden, ist die vorliegende Erfindung nicht darauf beschränkt und es sind auch Ausgestaltungen möglich, bei denen die Ringe nicht konzentrisch angeordnet sind, obgleich eine konzentrische Anordnung als besonders vorteilhaft betrachtet wird.

Es ist möglich und von der Erfindung umfasst, dass die Ebenen der verschiedenen Ringe entlang einer Rotationsachse relativ zueinander versetzt sind, so dass die Bearbeitungsstationen bzw. Führungen nicht in einer gemeinsamen Ebene liegen.Bei den oben diskutieren Ausführungsbeispielen wird der einzelne Hohlkörper (z.B. in Form einer Dose) durch die Umsetzeinheit von der ersten, äußeren Führung auf die zweite, innere Führung (die gegenläufig oder gleichsinnig betrieben wird) und nach einem Umlauf von beinahe 360° wieder zurück auf die äußere Führung umgesetzt.

Es ist allerdings auch möglich, hier eine Modifikation insofern vorzusehen, dass eine Konfigurationsmöglichkeit der Zuführvorrichtung erlaubt, dass man wahlweise mit der inneren Führung (z.B. mit insgesamt 84 Stationen, von denen etwa 72 für Bearbeitungsschritte nutzbar gemacht sind) oder ohne die innere Führung (also nur mit der äußeren Führung, z.B. mit 48 Stationen insgesamt, davon 45 für Bearbeitungsschritte nutzbar) fahren kann.

Auch wenn diese Konfigurationsmöglichkeit in der Regel nicht im laufenden Betrieb genutzt werden kann, kann etwa bei einem Produktwechsel eine Wahlmöglichkeit vorgesehen sein, die Zuführvorrichtung so zu konfigurieren, dass ein kompliziertes Produkt mit z.B. bis zu 72 Bearbeitungsschritten gefahren wird oder im Falle eines einfacheren Produktes das Umsetzen auf die innere Führung unterlassen wird, wenn hier beispielsweise die dann nur noch zugänglichen 45 Bearbeitungsschritte ausreichen.

Eine andere interessante Bearbeitungsschritt- bzw. Stationszahlkombination kann durch 64 Stationen insgesamt (also 52 Bearbeitungsschritte (außen und innen)) und 40 Stationen (etwa 37 Bearbeitungsschritte (nur außen)) angegeben werden.

Je nach Konstruktionsdetails kann die Wahlmöglichkeit auch weitere Optionen wie etwa die optionale Nutzung nur der inneren Führung neben der Optionen der Nutzung beider Führungen und der Nutzung nur der äußeren Führung oder auch Zwischenoptionen umfassen, bei denen ein Teil der inneren und/oder äußeren Führung selektiv von der Nutzung ausgelassen wird.

## Patentansprüche

1. Zuführvorrichtung für eine sukzessive Bearbeitung von Hohlkörpern an ringförmig angeordneten Bearbeitungsstationen, mit:
einer ersten umlaufenden Führung (13, 23, 33, 43) für erste Bearbeitungsstationen und einer zweiten umlaufenden Führung (14, 24, 34, 44) für zweite Bearbeitungsstationen, wobei eine der Führungen (14, 24, 34, 44) innerhalb der anderen Führung angeordnet (13, 23, 33, 43) ist, und
einer Umsetzeinheit (17, 27, 37a, 37b, 47) zum Umsetzen eines Hohlköpers in die erste Führung (13, 23, 33, 43) und/oder die zweite Führung (14, 24, 34, 44),
**dadurch gekennzeichnet, dass**
die erste Führung (23, 33) separat von der zweiten Führung (24, 34) vorgesehen ist,
wobei die Umsetzeinheit (17, 27, 37a, 37b) zum Umsetzen eines Hohlkörpers jeweils von der ersten Führung (13, 23, 33) in die zweite Führung (14, 24, 34) und von der zweiten Führung (14, 24, 34) in die erste Führung (13, 23, 33) ausgestaltet ist oder dadurch, dass
die erste Führung (43) und die zweite Führung (44) für eine gegenläufige Bewegung ausgestaltet sind,
wobei die Umsetzeinheit (47) für ein insbesondere paralleles Zuführen eines ersten Hohlkörpers in die erste Führung (43) und eines zweiten Hohlkörpers in die zweite Führung (44) und ein insbesondere paralleles Entnehmen des ersten Hohlkörpers aus der ersten Führung (43) und des zweiten Hohlkörpers aus der zweiten Führung (44) ausgestaltet ist.

2. Zuführvorrichtung nach der ersten Alternative von Anspruch 1,
wobei die Umsetzeinheit (37a, 37b) ein erstes Umsetzelement (37a) zum Umsetzen eines Hohlkörpers von der ersten Führung (33) in die zweite Führung (34) und ein zweites Umsetzelement (37b) zum Umsetzen eines Hohlkörpers von der zweiten Führung (34) in die erste Führung (33) aufweist.

3. Zuführvorrichtung nach Anspruch 2 oder der ersten Alternative von Anspruch 1,
wobei die erste Führung (33) und die zweite Führung (34) für eine gegenläufige Bewegung ausgestaltet sind.

4. Einziehmaschine (11, 21, 31, 41) zur sukzessiven Bearbeitung von Hohlkörpern, mit
einer Zuführvorrichtung nach einem der vorstehenden Ansprüche und Bearbeitungsstationen für Hohlkörper, die zur Zuführung von Hohlkörpern mittels der Zuführvorrichtung ausgestaltet sind, wobei die Bearbeitungsstationen auf einem ersten Ring entsprechend der ersten Führung (13, 23, 33, 43) und einem zweiten Ring entsprechend der zweiten Führung (14, 24, 34, 44) angeordnet sind.

5. Verfahren (100) zur sukzessiven Zuführung von Hohlkörpern an ringförmig angeordneten Bearbeitungsstationen, mit
Umsetzen (104, 106) eines Hohlkörpers in eine erste Führung und/oder eine zweite Führung,
wobei die erste Führung eine erste umlaufende Führung für erste Bearbeitungsstationen ist und die zweite Führung eine zweite umlaufende Führung für zweite Bearbeitungsstationen ist, wobei eine der Führungen innerhalb der anderen Führung angeordnet ist,
wobei der Schritt des Umsetzens (104, 106) mehrfach ausgeführt wird und das mehrfache Umsetzen ein Umsetzen (106) eines Hohlkörpers in die erste Führung und ein Umsetzen (104) eines Hohlkörpers in die zweite Führung umfasst,
**dadurch gekennzeichnet, dass**
die erste Führung separat von der zweiten Führung vorgesehen ist, wobei das Umsetzen (104, 106) ein Umsetzen eines Hohlkörpers jeweils von der ersten Führung in die zweite Führung und von der zweiten Führung in die erste Führung umfasst,
oder dadurch, dass
die erste Führung und die zweite Führung für eine gegenläufige Bewegung ausgestaltet sind, wobei das Umsetzen ein insbesondere paralleles Zuführen eines ersten Hohlkörpers in die erste Führung und eines zweiten Hohlkörpers in die zweite Führung und ein insbesondere paralleles Entnehmen des ersten Hohlkörpers aus der ersten Führung und des zweiten Hohlkörpers aus der zweiten Führung umfasst.

6. Computerprogramm mit Computerprogrammmitteln, die eine Zuführvorrichtung nach einem der Ansprüche 1 bis 3 oder eine Einziehmaschine nach Anspruch 4 dazu veranlassen, ein Verfahren nach Anspruch 5 auszuführen, wenn das Computerprogramm auf der Zuführvorrichtung oder der Einziehmaschine ausgeführt wird.

## Claims

1. Feed device for successive processing of hollow bodies at processing stations which are arranged in a ring-shaped manner, having:
a first circumferential guide (13, 23, 33, 43) for first processing stations and a second circumferential guide (14, 24, 34, 44) for second processing stations, one of the guides (14, 24, 34, 44) being arranged inside the other guide (13, 23, 33, 43), and
a moving unit (17, 27, 37a, 37b, 47) for moving a hollow body into the first guide (13, 23, 33, 43) and/or the second guide (14, 24, 34, 44), **characterised in that**
the first guide (23, 33) is provided separately from the second guide (24, 34),
the moving unit (17, 27, 37a, 37b) being configured for moving, respectively, a hollow body from the first guide (13, 23, 33) into the second guide (14, 24, 34) and from the second guide (14, 24, 34) into the first guide (13, 23, 33) or in that
the first guide (43) and the second guide (44) are configured for a movement in opposite directions,
the moving unit (47) being configured for, in particular, parallel feeding of a first hollow body into the first guide (43) and a second hollow body into the second guide (44), and for, in particular, parallel removal of the first hollow body from the first guide (43) and the second hollow body from the second guide (44).

2. Feed device according to the first alternative of claim 1,
wherein the moving unit (37a, 37b) has a first moving element (37a) for moving a hollow body from the first guide (33) into the second guide (34) and a second moving element (37b) for moving a hollow body from the second guide (34) into the first guide (33).

3. Feed device according to claim 2 or the first alternative of claim 1,
wherein the first guide (33) and the second guide (34) are designed for contrary movement.

4. Necking machine (11, 21, 31, 41) for the successive processing of hollow bodies, having
a feed device according to any one of the preceding claims and
processing stations for hollow bodies which are designed for feeding hollow bodies by means of the feed device, wherein the processing stations are arranged on a first ring corresponding to the first guide (13, 23, 33, 43) and a second ring corresponding to the second guide (14, 24, 34, 44).

5. Method (100) for successive feeding of hollow bodies at processing stations which are arranged in a ring-shaped manner comprising
moving (104, 106) a hollow body into a first guide and/or a second guide,
the first guide being a first circumferential guide for first processing stations and the second guide being a second circumferential guide for second processing stations, one of the guides being arranged inside the other guide,
the step of moving (104, 106) being carried out multiple times, and the multiple moving comprising moving (106) a hollow body into the first guide and moving (104) a hollow body into the second guide,
**characterised in that**
the first guide is provided separately from the second guide, the moving (104, 106) comprising moving a hollow body respectively from the first guide into the second guide and from the second guide into the first guide,
or **in that**
the first guide and the second guide are configured for a movement in opposite directions, the moving comprising, in particular, parallel feeding of a first hollow body into the first guide and a second hollow body into the second guide, and, in particular, parallel removal of the first hollow body from the first guide and the second hollow body from the second guide.

6. Computer program product having a computer program which causes a feed device according to one of claims 1 to 3 or a necking machine according to claim 4 to perform a method according to claim 5 when the computer program is executed in the feed device or the necking machine.

## Revendications

1. Dispositif d'amenée pour un traitement successif de corps creux à des postes de traitement disposés annulairement, comprenant:
un premier guidage (13, 23, 33, 43) sans fin pour des premiers postes de traitement et un deuxième guidage (14, 24, 34, 44) sans fin pour des deuxièmes postes de traitement, l'un des guidages (14, 24, 34, 44) étant disposé à l'intérieur de l'autre guidage (13, 23, 33, 43) et
une unité (17, 27, 37a, 37b, 47) de transfert pour transférer un corps creux dans le premier guidage (13, 23, 33, 43) et/ou dans le deuxième guidage (14, 24, 34, 44),
**caractérisé en ce que**
le premier guidage (23, 33) est prévu distinct du deuxième guidage (24, 34),
dans lequel l'unité (17, 27, 37a, 37b) de transfert est conformée pour le transfert d'un corps creux, respectivement du premier guidage (13, 23, 33) au deuxième guidage (14, 24, 34) et du deuxième guidage (14, 24, 34) au premier guidage (13, 23, 33),
ou **en ce que**
le premier guidage (43) et le deuxième guidage (44) sont conformés pour un déplacement en sens contraire,
dans lequel l'unité (47) de transfert est conformée pour une amenée, notamment parallèle, d'un premier corps creux dans le premier guidage (43) et d'un deuxième corps creux dans le deuxième guidage (44), et pour un enlèvement, notamment parallèle, du premier corps creux du premier guidage (43) et du deuxième corps creux du deuxième guidage (44).

2. Dispositif d'amenée suivant la première branche de l'alternative de la revendication 1,
dans lequel l'unité (37a, 37b) de transfert a un premier élément (37a) de transfert pour le transfert d'un corps creux du premier guidage (33) au deuxième guidage (34) et un deuxième élément (37b) de transfert pour le transfert d'un corps creux du deuxième guidage (34) au premier guidage (33).

3. Dispositif d'amenée suivant la revendication 2 ou la première branche de l'alternative de la revendication 1,
dans lequel le premier guidage (33) et le deuxième guidage (34) sont conformés pour un déplacement en sens contraire.

4. Machine (11, 21, 31, 41) à rétreindre pour le traitement successif de corps creux, comprenant
un dispositif d'amenée suivant l'une des revendications précédentes et
des postes de traitement de corps creux, qui sont conformés pour l'amenée de corps creux au moyen du dispositif d'amenée, les postes de traitement étant disposés sur un premier anneau correspondant au premier guidage (13, 23, 33, 43) et sur un deuxième anneau correspondant au deuxième guidage (14, 24, 34, 44).

5. Procédé d'amenée successive de corps creux à des postes de traitement disposés annulairement, dans lequel
on transfère (104, 106) un corps creux à un premier guidage et/ou à un deuxième guidage,
dans lequel le premier guidage est un premier guidage sans fin de premiers postes de traitement et le deuxième guidage est un deuxième guidage sans fin de deuxièmes postes de traitement, l'un des guidages étant disposé à l'intérieur de l'autre guidage,
le stade de transfert (104, 106) étant exécuté plusieurs fois et le transfert plusieurs fois comprenant un transfert (106) d'un corps creux au premier guidage et un transfert (104) d'un corps creux au deuxième guidage,
**caractérisé en ce que**
le premier guidage est prévu distinct du deuxième guidage, le transfert (104, 106) comprenant un transfert d'un corps creux respectivement du premier guidage au deuxième guidage
ou **en ce que**
le premier guidage et le deuxième guidage sont conformés pour un mouvement en sens contraire, le transfert comprenant une amenée, notamment parallèle, d'un premier corps creux au premier guidage et d'un deuxième corps creux au deuxième guidage et un enlèvement, notamment parallèle, du premier corps creux du premier guidage et du deuxième corps creux du deuxième guidage.

6. Programme d'ordinateur ayant des moyens de programme d'ordinateur, qui font qu'un dispositif d'amenée suivant l'une des revendications 1 à 3 ou une machine à rétreindre suivant la revendication 4 exécute un procédé suivant la revendication 5, lorsque le programme d'ordinateur est réalisé sur le dispositif d'amenée ou sur la machine à rétreindre.
